# EUROPÄISCHE PATENTSCHRIFT

(11) **EP 3 976 329 B1**
(45) Veröffentlichungstag und Bekanntmachung des Hinweises auf die Patenterteilung: **03.06.2026**
(21) Anmeldenummer: 20727253.5
(22) Anmeldetag: 19.05.2020
(51) Int. Cl.: B27D 5/00

(54) **VERFAHREN ZUM BESCHICHTEN EINES BAUTEILS SOWIE BESCHICHTUNGSVORRICHTUNG**
METHOD FOR COATING OF A WORKPIECE AND COATING DEVICE
PROCEDE POUR POSE DE REVETEMENT D'UNE PIECE ET DISPOSITIF DE POSE DE REVETEMENT

(30) Priorität: 24.05.2019 DE 102019113932
(43) Veröffentlichungstag der Anmeldung: 06.04.2022
(73) Patentinhaber: HOMAG GmbH, 72296 Schopfloch (DE)
(72) Erfinder: CALMBACH, Martin, 72160 Horb-Dießen (DE); SCHATZ, Felix, 72175 Dornhan (DE); SCHLEEH, Friedrich, 72226 Simmersfeld (DE); KIMMICH, Jörg, 72172 Sulz a. N. (DE)
(74) Vertreter: Hoffmann Eitle
(86) Internationale Anmeldenummer: PCT/EP2020/063927
(87) Internationale Veröffentlichungsnummer: WO 2020/239528

(56) Entgegenhaltungen:
- EP-A1- 3 533 573
- WO-A1-02/14033
- WO-A1-2005/077625
- WO-A1-2019/035017
- DE-A1- 102018 208 062
- US-A- 4 084 645

## Beschreibung

### Technisches Gebiet

Die Erfindung betrifft ein Verfahren zum Beschichten eines Werkstücks, gemäß dem Oberbegriff des Anspruchs 1 und eine Beschichtungsvorrichtung gemäß dem Oberbegriff des Anspruchs 7. Ein solches Verfahren und eine solche Vorrichtung sind aus dem Dokument DE 10 2018 208 062 A1 bekannt.

Im Rahmen des Verfahrens wird beispielsweise eine Schmalseite eines plattenförmigen Werkstücks mit einem streifenförmigen Beschichtungsmaterial versehen. Ferner betrifft die Erfindung eine Beschichtungsvorrichtung.

### Stand der Technik

Im Bereich der Möbel- und Bauelemente-Industrie werden Spanplatten, MDF-Platten oder andere plattenförmige Werkstücke im Bereich ihrer Schmal- oder Breitflächen regelmäßig mit einem Beschichtungsmaterial versehen. Im Fall einer Schmalflächenbeschichtung wird ein streifenförmiges Beschichtungsmaterial mittels einer Andruckrolle an ein Werkstück gepresst, wobei eine haftende Verbindung durch ein am Werkstück und/oder am Beschichtungsmaterial vorgesehenes Haftmittel erreicht wird.

Eines der heutigen Probleme bei der Fertigung ist, dass eine Reaktion auf Veränderungen während der laufenden Produktion nur bedingt möglich ist. Üblicherweise wird vor Beginn der Produktion eine Einstellung der Beschichtungsmaschine vorgenommen, um eine geforderten Fertigungsqualität zu gewährleisten.

In diesem Zusammenhang ist bekannt, ein Beschichtungsmaterial bei der Beschichtung eines Werkstücks mit einer bestimmten Anpresskraft an das Werkstück zu drücken. Die Anpresskraft, mit der das Beschichtungsmaterial gegen das Werkstück gedrückt wird, hat einen Einfluss auf die Qualität der Fuge und den Schälwiderstand. Die Anpresskraft wird meist nur durch eine fest eingestellte Zustellung der Andruckrolle relativ ungenau oder gar nicht definiert. Verschiebt sich das Werkstück relativ zur Position der Andruckrolle, beispielsweise durch ein Verrutschen auf dem Förderriemen, wird dies nicht erkannt und es kann zu einer Fehlverleimung kommen.

Selbst wenn die Anpresskraft definiert ist, kann bei einem fehlerhaften Einzug eines Beschichtungsmaterial in den Fügebereich eine Situation entstehen, in der zwei übereinanderliegende Beschichtungsmaterialien unter einer definierten Anpresskraft an ein Werkstück angepresst werden, ohne dass dies erfasst wird. Die fehlerhafte Beschichtung wird erst zu einem späteren Zeitpunkt erkannt, beispielsweise wenn der Bediener der Maschine die von der Beschichtungsmaschine bearbeiteten Werkstücke vom Werkzeugstapel entnimmt. Zu diesem Zeitpunkt kann es jedoch sein, dass bereits mehrere Werkstücke fehlerhaft beschichtet wurden.

Es ist das Dokument DE 10 2018 208 062 A1 bekannt, das eine Andrückvorrichtung zum Andrücken eines Beschichtungsmaterials gegen platten- oder leistenförmige Werkstücke, die bevorzugt zumindest abschnittsweise aus Holz, Holzwerkstoffen, Kunststoff oder dergleichen bestehen, schreibt, umfassend:
eine Andrückrolle zum Andrücken des Beschichtungsmaterials gegen die Werkstücke, eine Halterung, welche die Andrückrolle um eine Achse drehbar lagert, und eine Kraftregulierungseinrichtung, welche dazu ausgestaltet ist,
eine Kraft zu steuern oder zu regeln, mit der die Andrückrolle gegen das Beschichtungsmaterial drückt.

### Gegenstand der Erfindung

Die Erfindung zielt darauf ab, ein Verfahren zur Erhöhung der Prozesssicherheit und/oder Steigerung der Verarbeitungsqualität bei der Beschichtung eines Werkstücks mit einem Beschichtungsmaterial bereitzustellen.

Anspruch 1 stellt ein entsprechendes Verfahren bereit. Weitere bevorzugte Ausführungsformen sind in den abhängigen Ansprüchen aufgeführt. Merkmale der Vorrichtung können jeweils einzeln im Rahmen des Verfahrens zum Einsatz kommen, und umgekehrt.

Das Verfahren zum Beschichten eines Werkstücks umfasst die folgenden Schritte: Zuführen eines Beschichtungsmaterials und Andrücken des Beschichtungsmaterials am Werkstück mittels einer Andruckeinrichtung, wobei während des Andrückens des Beschichtungsmaterials eine Position und/oder Anpresskraft der Andruckeinrichtung erfasst wird, um eine Relativposition der Andruckeinrichtung zum Werkstück zu ermitteln, wobei die Position und/oder Anpresskraft der Andruckeinrichtung oder die Relativposition mit einem Soll-Wert abgeglichen wird, wobei bei Abweichung der Position und/oder Anpresskraft der Andruckeinrichtung oder der Relativposition um einen ersten Schwellwert vom Soll-Wert ein optisches und/oder akustisches Warnsignal ausgegeben wird.

Beispielsweise kann auf diese Weise eine Relativposition der Andruckeinrichtung zum Werkstück ermittelt werden. Die Position der Andruckeinrichtung relativ zu einer imaginären Ebene, die die zu beschichtende Ebene des Werkstücks definiert, stellt die Relativposition dar.

Die imaginäre Ebene kann bei einem während des Beschichtungsvorgangs stationär angeordneten Werkstück durch eine Kombination aus Werkstückdaten und Anordnung des Werkstücks oder durch Erfassung mittels eines Sensors bestimmt werden. Wird das Werkstück während des Beschichtungsvorgangs bewegt, wird die imaginäre Ebene beispielweise durch ein Führungslineal zur Ausrichtung des Werkstücks bestimmt.

Die Position der Andruckeinrichtung kann gemäß einer Variante durch Erfassung der Position der X, Y und C-Achse der die Andruckeinrichtung umfassenden Beschichtungsvorrichtung bestimmt werden.

Um die Positionserfassung weiter zu verfeinern, kann die Position der Andruckeinrichtung an der Beschichtungsvorrichtung bestimmt werden, insbesondere wenn die Position der Andruckeinrichtung am Aggregat verstellt werden kann. Beispielsweise ist die Andruckeinrichtung exzentrisch gelagert und eine Verstellung der Andruckeinrichtung um die exzentrische Lagerung wird erfasst.

Ist die Andruckeinrichtung federnd gelagert, kann alternativ oder zusätzlich basierend auf der an der Lagerung wirkenden Kraft eine Position der Andruckeinrichtung bestimmt werden.

Beispielsweise wird die Relativposition zwischen Andruckeinrichtung und Werkstück mittels einer erfassten Anpresskraft ermittelt, mit der die Andruckeinrichtung gegen ein Werkstück gedrückt wird.

Gemäß einer weiteren Ausführungsform wird die Relativposition der Andruckeinrichtung zum Werkstück mit einem insbesondere optisch arbeitenden Abstandssensor ermittelt.

Das erfindungsgemäße Verfahren hat den Vorteil, dass eine Konturüberwachung durchgeführt wird, sodass die Qualität der Beschichtung dokumentiert und/oder überwacht werden kann.

Die Andruckeinrichtung kann eine Andruckrolle sein, die ein Beschichtungsmaterial mit dem Werkstück in Kontakt bringt. Alternativ oder zusätzlich kann die Andruckeinrichtung auch eine Nachdruckrolle sein, mit der das bereits durch die Andruckrolle am Werkstück aufgebrachte Beschichtungsmaterial nochmals angedrückt wird.

Erfindungsgemäß wird die Position und/oder Anpresskraft der Andruckeinrichtung mit einem Soll-Wert, insbesondere einer Soll-Wert-Kurve, abgeglichen. Der Soll-Wert ist in einer Steuereinrichtung der das Verfahren ausführenden Beschichtungsvorrichtung gespeichert Somit ist es möglich, eine fehlerhafte Beschichtung zu erkennen und entsprechende Gegenmaßnahmen einzuleiten.

Erfindungsgemäß wird bei Abweichung der Position und/oder Anpresskraft der Andruckeinrichtung um einen ersten Schwellwert von der Soll-Wert-Kurve ein optisches und/oder akustisches Warnsignal ausgegeben, wobei bevorzugt ist, dass bei Abweichen der Position der Andruckeinrichtung um einen zweiten Schwellwert ein Maschinenstopp bedingt wird. Somit wird es möglich, zeitnah auf entsprechende Abweichungen zu reagieren und Maßnahmen zur Qualitätssteigerung, gegebenenfalls zur Verhinderung einer Beschädigung der Beschichtungsvorrichtung, einzuleiten.

Gemäß einer weiteren Ausführungsform ist es vorgesehen, dass beim Zuführen des Beschichtungsmaterials eine Temperatur des Beschichtungsmaterials und/oder Temperatur eines am Beschichtungsmaterial vorgesehenen Haftmittels zu erfasst wird. Die erfasste Temperatur kann verwendet werden, um einen Beschichtungsvorgang lückenlos zu dokumentieren. Auch ist es möglich, die ermittelte Temperatur zur Regelung einer Heizeinrichtung zur Aktivierung oder Reaktivierung eines Haftmittels oder einer Erwärmungseinrichtung zum Erwärmen des Haftmittels zu verwenden, um somit die Qualität des Beschichtungsergebnisses weiter zu steigern.

Gemäß einer Ausführungsform ist es vorgesehen, dass beim Zuführen des Beschichtungsmaterials eine Länge des Beschichtungsmaterials erfasst wird. Somit kann festgestellt und dokumentiert werden, in welcher Länge ein Beschichtungsmaterial für ein bestimmtes Werkstück bereitgestellt wird. Alternativ oder zusätzlich ist es möglich, eine Kappeinrichtung zum Zuschneiden des Beschichtungsmaterials nachzuregeln. In diesem Zusammenhang ist es bevorzugt, dass die Erfassung der Länge des Beschichtungsmaterials durch eine Einrichtung zur Ermittlung der Länge des Beschichtungsmaterials, insbesondere ein Messrad, vorgenommen wird, die an dem die Andruckeinrichtung umfassenden Aggregat vorgesehen ist.

Es ist bevorzugt, dass die Position der Andruckeinrichtung, gegebenenfalls auch die Temperatur des Beschichtungsmaterials und/oder Temperatur des am Beschichtungsmaterial vorgesehenen Haftmittels und/oder die Länge des Beschichtungsmaterials zu einer Speichereinrichtung, insbesondere einer Cloud, übertragen wird. Die Speichereinrichtung ermöglicht einen Zugriff auf die darin hinterlegten Informationen, so dass diese zur Ausarbeitung weiterer Maßnahmen für die Qualitätssicherung weiterverarbeitet werden können. Eine Cloud ermöglicht dabei einen globalen Zugriff, so dass die Flexibilität weiter gesteigert wird.

Es ist bevorzugt, dass das Beschichtungsmaterial ein streifenförmiges Beschichtungsmaterial zur Beschichtung einer Schmalseite eines plattenförmigen Werkstücks ist. Ein solches Beschichtungsmaterial kann beispielsweise aus einem Kunststoffmaterial oder einem Furnier ausgebildet sein.

Ferner stellt die Erfindung eine Beschichtungsvorrichtung zum Anbringen eines Beschichtungsmaterials an einem Werkstück bereit. Die Beschichtungsvorrichtung umfasst: eine Andruckeinrichtung, insbesondere eine Andruckrolle, zum Andrücken des Beschichtungsmaterials an das Werkstück, eine Einrichtung zum Ändern der Position der Andruckeinrichtung sowie eine Erfassungseinrichtung zur Erfassung einer Position und/oder Anpresskraft der Andruckeinrichtung, um eine Relativposition der Andruckeinrichtung zum Werkstück zu ermitteln. Die Beschichtungsvorrichtung kann eingerichtet sein, ein Verfahren gemäß einem der vorangegangenen Verfahrensaspekte durchzuführen. Die Vorteile der Beschichtungsvorrichtung entsprechend zumindest teilweise denjenigen, die bereits zum Verfahren beschrieben wurden.

Gemäß einer Ausführungsform ist die Beschichtungsvorrichtung bewegbar, insbesondere entlang der X, Y und C-Achse. In diesem Fall wird das zu beschichtende Werkstück während des Beschichtungsvorgangs stationär gehalten, beispielsweise mittels Saugspannern.

In einer weiteren Zielrichtung kann es vorgesehen sein, dass das Werkstück beim Beschichtungsvorgang bewegt wird, beispielsweise mittels eines Förderbands oder eines Förderriemens. Die Beschichtungsvorrichtung ist während des Beschichtungsvorgangs stationär angeordnet.

Auch eine Überlagerung einer Bewegung des Werkstücks und einer Bewegung der Beschichtungsvorrichtung während des Beschichtungsvorgangs ist denkbar.

Die Beschichtungsvorrichtung kann in einer Ausführungsform eine Temperaturmesseinrichtung aufweisen, die eingerichtet ist, eine Temperatur des Beschichtungsmaterials und/oder Temperatur eines am Beschichtungsmaterial vorgesehenen Haftmittels zu erfassen.

Die Beschichtungsvorrichtung umfasst gemäß einer weiteren Ausführungsform eine Einrichtung zur Ermittlung der Länge des Beschichtungsmaterials, insbesondere ein Messrad. Auf diese Weise kann ermittelt werden, ob eine Abweichung oder ein Überschreiten des zugeführten Beschichtungsmaterials gegenüber einem Sollwert vorliegt. Die ermittelte Information kann zur Dokumentation oder zur Steuerung einer Kappeinrichtung der Beschichtungsvorrichtung genutzt werden.

Dabei ist bevorzugt, dass die Einrichtung zur Ermittlung der Länge des Beschichtungsmaterials, insbesondere das Messrad, derart an der Beschichtungsvorrichtung angebracht ist, dass ein durch einen Zuführkanal der Beschichtungsvorrichtung geführtes Beschichtungsmaterial erfasst und dessen Länge detektiert wird. Durch die Detektion in der Beschichtungsvorrichtung kann das Beschichtungsmaterial positionsgenau am Werkstück angesetzt werden.

Es ist bevorzugt, dass die Andruckeinrichtung exzentrisch gelagert ist. Somit kann durch eine Verstellbewegung eine Position der Andruckeinrichtung geändert werden.

Die Beschichtungsvorrichtung gemäß einer weiteren Ausführungsform kann eine Antriebseinrichtung umfassen, um die Position der Andruckeinrichtung zu verändern. Die Antriebseinrichtung kann auch zur Ermittlung der Ist-Position der Andruckeinrichtung verwendet werden, beispielsweise mittels einer Winkelposition eines Motors der Antriebseinrichtung. Es ist in diesem Zusammenhang bevorzugt, dass die Antriebseinrichtung ein Servomotor ist.

In einer Ausführungsform ist es vorgesehen, dass die Andruckeinrichtung mit einer Elastomerlagerung gelagert ist, wobei Messstreifen vorgesehen sind, um eine Anpresskraft und/oder Position der Andruckeinrichtung zu ermitteln.

Mittels der Elastomerringe wird eine definierte Position der Andruckeinrichtung bereitgestellt.

Gemäß einer weiteren Ausführungsform umfasst die Beschichtungsvorrichtung eine Steuereinrichtung zur Aufnahme der ermittelten Position der Andruckeinrichtung. Die Steuereinrichtung kann ferner eingerichtet sein, Steuerbefehle auszugeben, um die Position der Andruckeinrichtung zu ändern, insbesondere basierend auf einem Ist-Soll-Vergleich der Position der Andruckeinrichtung.

Über die Steuereinrichtung kann die Sollkontur des Werkstücks mit einer ermittelten Ist-Kontur, die durch die Position der Andruckeinrichtung bestimmt wird, verglichen werden. Basierend hierauf können weitere Schritte abgeleitet werden, beispielsweise die Ausgabe eines Hinweises oder einer Information an den Maschinenbediener, oder die Auslösung eines Maschinenstopps.

In einer Ausführungsform ist es vorgesehen, dass die Andruckeinrichtung federnd gelagert ist und die Ausgleichbewegung gemessen wird.

In einer weiteren Ausführungsform umfasst die Beschichtungsvorrichtung einen, insbesondere optisch arbeitenden, Abstandssensor umfasst. Mit dem Abstandssensor kann der Relativabstand zwischen Andruckeinrichtung und Werkstück erfasst werden.

Ferner wird gemäß einem weiteren Aspekt eine Beschichtungsmaschine bereitgestellt, die die Beschichtungsvorrichtung umfasst. Bevorzugt ist die Beschichtungsvorrichtung in der Beschichtungsmaschine bewegbar angeordnet, insbesondere entlang der X, Y und C-Achse, gegebenenfalls auch in weiteren Richtungen.

### Kurze Beschreibung der Zeichnungen

- Fig. 1: zeigt eine erste Ausführungsform einer Beschichtungsvorrichtung zur Durchführung eines Beschichtungsverfahrens.
- Fig. 2: zeigt eine zweite Ausführungsform einer Beschichtungsvorrichtung zur Durchführung eines Beschichtungsverfahrens.
- Fig. 3: zeigt eine dritte Ausführungsform einer Beschichtungsvorrichtung zur Durchführung eines Beschichtungsverfahrens.

### Detaillierte Beschreibung der bevorzugten Ausführungsformen

Anhand der Figuren werden bevorzugte Ausführungsformen der Erfindung dargestellt. Merkmale der Ausführungsformen können jeweils einzeln miteinander kombiniert werden, um weitere Ausführungsformen auszubilden. Obwohl die Ausführungsformen nicht einschränkend, sondern beispielhaft, zu verstehen sind, können Merkmale auch einzeln zur Spezifizierung der Erfindung herangezogen werden.

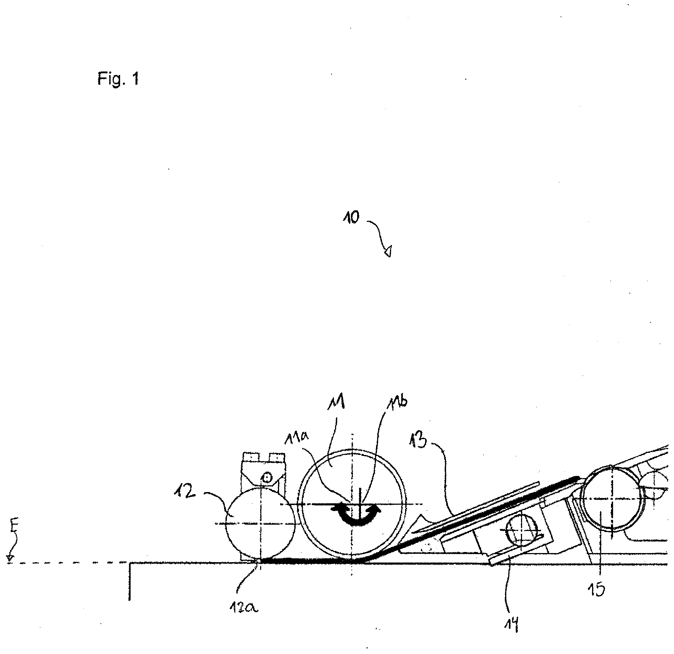

Im Ausführungsbeispiel gemäß Figur 1 wird eine Beschichtungsvorrichtung 10 zum Anbringen eines Beschichtungsmaterials B an einem Werkstück W beschrieben. Eine solche Beschichtungsvorrichtung 10 kann in einer Beschichtungsmaschine zum Einsatz kommen. Insbesondere wird eine Beschichtung einer Schmalfläche eines plattenförmigen Werkstücks W dargestellt, wobei eine Beschichtungsvorrichtung einer weiteren, nicht dargestellten Ausführungsform auch zur Beschichtung der Breitfläche verwendet werden kann.

Zum Durchführen des Beschichtungsvorgang wird eine Relativbewegung zwischen dem Werkstück W und der Beschichtungsvorrichtung 10 bereitgestellt. Dies kann durch ein Bewegen des Werkstücks W relativ zur stationär angeordneten Beschichtungsvorrichtung 10 oder durch ein Bewegen der Beschichtungsvorrichtung 10 relativ zum gehaltenen Werkstück W durchgeführt werden. Auch eine Kombination einer Bewegung des Werkstücks und der Beschichtungsvorrichtung ist möglich. Wird das Werkstück bewegt, kann dies durch einen Förderriemen oder ein Förderband der Beschichtungsmaschine erfolgen. In den Figuren wird beispielhaft eine Beschichtungsvorrichtung gezeigt, die in einer Beschichtungsmaschine bewegt wird, wohingegen das Werkstück stationär gehalten wird, rein beispielhaft mittels Saugspannern.

Die Beschichtungsvorrichtung 10 umfasst eine Andruckrolle (Andruckeinrichtung) 11, die das Beschichtungsmaterial B an eine Schmalseite des Werkstücks W gedrückt. Die Andruckrolle 11 ist um eine Drehachse 11a drehbar sowie um eine exzentrische Lagerachse 11b positionierbar. Insbesondere wird durch eine Schwenkbewegung der Andruckrolle 11 um die Lagerachse 11b eine Position der Andruckrolle 11 relativ zu einer imaginären Ebene E geändert, wobei diese imaginäre Ebene E einen Sollwert einer zu beschichtenden Oberfläche des Werkstücks W definiert.

Die Anpresskraft der Andruckrolle 11 wird mittels einer Antriebseinrichtung zur Verstellung der Andruckrolle 11 geregelt, indem das Drehmoment der Antriebseinrichtung entsprechend eingestellt wird. Auf diese Weise kann während eines Beschichtungsvorgangs eine definierte Anpresskraft eingehalten und somit das Beschichtungsmaterial mit dieser Anpresskraft an das Werkstück W gepresst werden.

Ferner ist eine Nachdruckrolle 12 vorgesehen, die das Beschichtungsmaterial B ebenfalls gegen das Werkstück W gedrückt. Obwohl im Ausführungsbeispiel lediglich eine Nachdruckrolle 12 dargestellt ist, können in weiteren Varianten auch mehrere Nachdruckrollen vorgesehen sein. Im Bereich der Nachdruckrolle 12 ist ein Stoßtaster 12a vorgesehen, der als Vorsprung ausgebildet ist und mit einer Vorderseite des Beschichtungsmaterials in Kontakt kommt, um eine Drehbewegung der Nachdruckrolle 12 auszulösen.

Benachbart zur Andruckrolle 11 ist ein Zuführkanal 13 zum Zuführen des Beschichtungsmaterials B zur Andruckrolle 11 vorgesehen. Der Zuführkanal 13 ist relativ zur imaginären Ebene E (oder zur zu beschichteten Oberfläche) geneigt ausgerichtet. An einer Position zwischen dem Zuführkanal 13 und der imaginären Ebene ist eine Heizeinrichtung 14 angeordnet. Mit der Heizeinrichtung 14 kann ein am Beschichtungsmaterial B vorgesehene oder aufgebrachte Haftmittelschicht aktiviert oder reaktiviert werden.

Zum Aufbringen einer Haftmittelschicht am Beschichtungsmaterial B umfasst die Beschichtungsvorrichtung 10 gemäß im vorliegenden Ausführungsbeispiel eine Auftragswalze 15, die eingerichtet ist, eine Haftmittelschicht an der zur imaginären Ebene E weisenden Seite des Beschichtungsmaterials B aufzubringen.

Die Heizeinrichtung 14 und die Auftragswalze 15 können im Betrieb der Beschichtungsvorrichtung einzeln oder in Kombination eingesetzt werden.

Die Beschichtungsvorrichtung 10 verfügt über eine Erfassungseinrichtung zur Erfassung einer Position der Andruckrolle 11. Gemäß der vorliegenden Ausführungsform ist die Erfassungseinrichtung durch die Antriebseinrichtung zur Verstellung der Position der Andruckrolle 11 anhand der exzentrischen Lagerung ausgebildet. Insbesondere wird während des Beschichtungsvorgangs die Winkelposition der Antriebsvorrichtung erfasst.

Die auf diese Weise ermittelte Ist-Position der Andruckrolle 11 kann während eines Beschichtungsvorgang erfasst und an eine Steuereinrichtung der Beschichtungsvorrichtung 10 übergeben werden. Mittels der Steuereinrichtung wird ein Abgleich der erfassten Ist-Position mit einer Soll-Position der Andruckrolle 11 durchgeführt, sodass auf diese Weise eine Konturüberwachung ermöglicht wird.

Obwohl die Ist-Position der Andruckrolle 11 in der ersten Ausführungsform taktil bestimmt wird, kann gemäß einer Modifikation auch ein berührungsloser Sensor, insbesondere eine Kamera, vorgesehen sein, um eine Position der Andruckrolle 11 zu ermitteln. Die taktile und berührungslose Erfassung können auch in Kombination zum Einsatz kommen, um die Zuverlässigkeit weiter zu steigern.

Obwohl es bevorzugt ist, dass die Ist-Position der Andruckrolle 11 während eines Beschichtungsvorgang erfasst wird, ist es gemäß einer weiteren Modifikation möglich, die Ist-Position während einer Messfahrt zu ermitteln, während derer ein Werkstück W ohne Zuführung eines Beschichtungsmaterial relativ zur Beschichtungsvorrichtung 10 bewegt wird. Auf diese Weise kann die zu beschichtende Oberfläche oder die bereits mit einem Beschichtungsmaterial versehene Oberfläche geprüft werden.

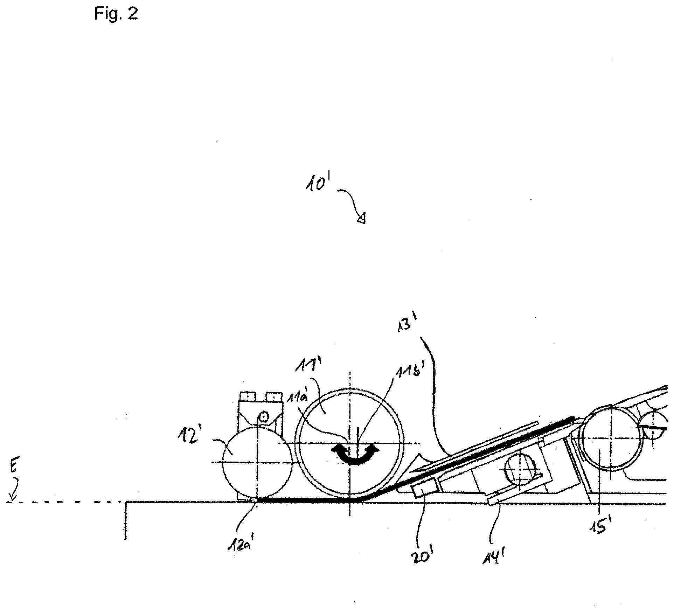

Figur 2 zeigt eine zweiten Ausführungsform einer Beschichtungsvorrichtung 10' der Erfindung. Komponenten der Beschichtungsvorrichtung 10', die ähnlich zu denjenigen der ersten Ausführungsform ausgebildet sind, sind mit entsprechenden Bezugszeichen gekennzeichnet. Zur detaillierten Beschreibung dieser Komponenten wird auf die Erläuterungen zur ersten Ausführungsform verwiesen. Auch die im Rahmen der ersten Ausführungsform beschriebenen Varianten und Modifikationen können bei der zweiten Ausführungsform entsprechend zum Einsatz kommen.

Insbesondere umfasst die Beschichtungsvorrichtung 10' eine Andruckrolle 11', die wie in der ersten Ausführungsform exzentrisch gelagert ist, sowie eine Nachdruckrolle 12'. Ferner umfasst die Beschichtungsvorrichtung 10' einen Zuführkanal 13', eine Heizeinrichtung 14' sowie eine Auftragswalze 15'.

Zusätzlich zur Beschichtungsvorrichtung 10 der ersten Ausführungsform umfasst die Beschichtungsvorrichtung 10' der zweiten Ausführungsform einen Temperatursensor 20', der in einem Endbereich des Zuführkanals 13' an einer zur imaginären Ebene weisenden Seite angeordnet ist. Der Temperatursensor 20' ist eingerichtet, eine Temperatur der Haftmittelschicht und/oder des Beschichtungsmaterials vor dem Bereich der Andruckzone der Andruckrolle' zu ermitteln.

Die auf diese Weise erfasste Ist-Temperatur der Haftmittelschicht und/oder des Beschichtungsmaterials kann während eines Beschichtungsvorgang erfasst und an die Steuereinrichtung der Beschichtungsvorrichtung 10' übergeben werden. Mittels der Steuereinrichtung wird ein Abgleich der erfassten Ist-Temperatur mit einer Soll-Temperatur durchgeführt, sodass auf diese Weise eine Überwachung der Fügetemperatur ermöglicht wird.

Wie bei der Beschichtungsvorrichtung 10 der ersten Ausführungsform verfügt die Beschichtungsvorrichtung 10' über eine Erfassungseinrichtung zur Erfassung der Ist-Position der Andruckrolle 11', sodass die Ist-Position während eines Beschichtungsvorgang erfasst und an die Steuereinrichtung der Beschichtungsvorrichtung 10' übergeben werden kann. Mittels der Steuereinrichtung wird ein Abgleich der erfassten Ist-Position mit einer Soll-Position der Andruckrolle durchgeführt, sodass auf diese Weise eine Konturüberwachung ermöglicht wird.

Somit ist es gemäß der zweiten Ausführungsform möglich, eine Überwachung der Fügetemperatur mit einer Konturüberwachung zu kombinieren, um auf diese Weise die Qualität der Beschichtung zu bewerten und gegebenenfalls bei Abweichungen durch Gegenmaßnahmen zu steigern.

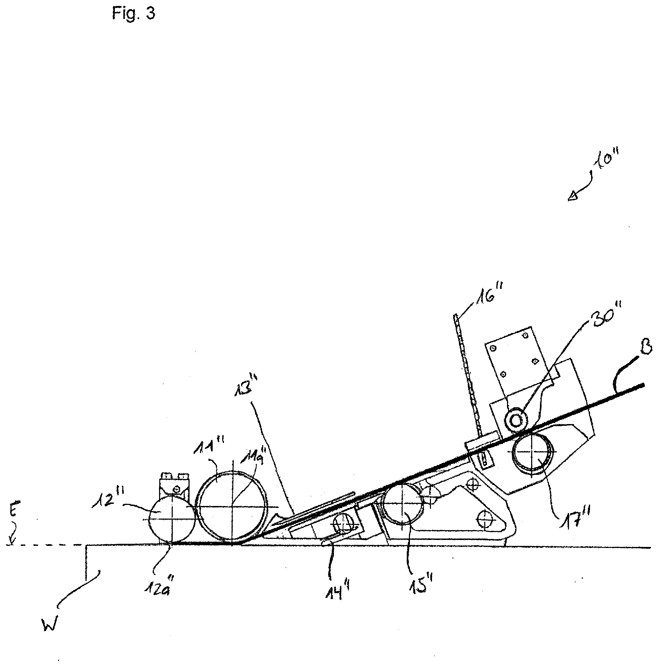

Figur 3 zeigt eine dritte Ausführungsform einer Beschichtungsvorrichtung 10" der Erfindung. Komponenten der Beschichtungsvorrichtung 10", die ähnlich zu denjenigen der ersten oder zweiten Ausführungsform ausgebildet sind, sind mit entsprechenden Bezugszeichen gekennzeichnet. Zur detaillierten Beschreibung dieser Komponenten wird auf die Erläuterungen zur ersten oder zweiten Ausführungsform verwiesen. Auch die im Rahmen der ersten und zweiten Ausführungsform beschriebenen Varianten und Modifikationen können bei der zweiten Ausführungsform entsprechend zum Einsatz kommen.

Insbesondere umfasst die Beschichtungsvorrichtung 10" eine Andruckrolle 11", die relativ zu einer imaginären Ebene E, welche die zu beschichtende Oberfläche definiert, beweglich ist, sowie eine Nachdruckrolle 12". Ferner umfasst die Beschichtungsvorrichtung 10" einen Zuführkanal 13", eine Heizeinrichtung 14" sowie eine Auftragswalze 15".

In Figur 3 ist ferner eine Kappeinrichtung 16" sowie eine Transportrolle 17" dargestellt. Diese Komponenten können auch bei den Beschichtungsvorrichtungen in der ersten und zweiten Ausführungsform vorgesehen sein.

Zusätzlich verfügt die Beschichtungsvorrichtung 10" über ein Messrad 30", das mit dem Beschichtungsmaterial B in Kontakt kommt und während des Zuführens des Beschichtungsmaterials B dessen Länge ermittelt. Die durch das Messrad 30" Ist-Länge des Beschichtungsmaterials B wird an die Steuereinrichtung der Beschichtungsvorrichtung 10" übertragen und kann mittels der Steuereinrichtung mit einer Soll-Länge abgeglichen werden. Wird eine Abweichung der Ist-Länge zur Soll-Länge ermittelt, so liegt ein Überstand des Beschichtungsmaterials oder ein zu kurzes Beschichtungsmaterial vor. Beides würde zu einem minderwertigen Beschichtungsergebnis führen.

Zusätzlich zur Überwachung der Länge des Beschichtungsmaterials kann gemäß der dritten Ausführungsform eine Konturüberwachung entsprechend der ersten Ausführungsform vorgenommen werden.

Gemäß einer weiteren, nicht dargestellten Ausführungsform wird die eine Überwachung der Fügetemperatur, eine Konturüberwachung sowie eine Überwachung der Länge des Beschichtungsmaterials kombiniert, um eine Qualität der Beschichtung zu bewerten und gegebenenfalls bei Abweichungen durch Gegenmaßnahmen zu steigern.

Die Steuereinrichtung der Beschichtungsvorrichtungen gemäß den zuvor beschriebenen Ausführungsformen kann jeweils eingerichtet sein, bei Ermittlung einer Abweichung des jeweiligen Istwerts vom zugehörigen Sollwert eine Reaktion auszulösen. Wird beispielsweise ein erster Schwellwert hinsichtlich der Ist-Position der Andruckrolle überschritten, so kann ein optisches oder akustisches Warnsignal angezeigt werden. Dies kann beispielsweise durch eine entsprechende Meldung im Bedienfeld einer Bedienungseinrichtung der Beschichtungsvorrichtung erfolgen. Wird ein zweiter Schwellwert überschritten, kann die Steuereinrichtung einen Maschinenstopp auslösen, da in dieser Situation eine Beschädigung der Maschine möglich ist.

Entsprechende Reaktionen können anhand der Temperaturüberwachung und/oder der Überwachung der Länge des Beschichtungsmaterials ausgelöst werden. Insbesondere kann die Steuereinrichtung die Heizeinrichtung 14, 14', 14" regeln, um eine Soll-Temperatur zu erreichen und/oder die Steuereinrichtung kann die Kappeinrichtung 16" regeln, um eine definierte Länge des Beschichtungsmaterials zu erhalten.

Ferner kann die Steuereinrichtung eingerichtet sein, die ermittelten Istwerte der Position der Andruckrolle, der Temperatur der Haftmittelschicht und/oder des Beschichtungsmaterials, und/oder der Länge des Beschichtungsmaterials an eine Speichereinrichtung zu übermitteln. Die Speichereinrichtung kann als dezentrale Speichereinrichtung in der Beschichtungsmaschine oder als zentrale Speichereinrichtung, beispielsweise eine Cloud, ausgebildet sein. Die in der Speichereinrichtung gespeicherten Istwerte können zur Qualitätskontrolle herangezogen werden, beispielsweise um nachzuweisen, dass in einem Fertigungszyklus bestimmte Qualitätskriterien eingehalten wurden.

Obwohl im Rahmen der Ausführungsformen eine Andruckrolle als Andruckeinrichtung beschrieben wird, kann es gemäß weiterer Ausführungsformen vorgesehen sein, dass alternativ oder zusätzlich die Position einer oder mehrerer Nachdruckrollen erfasst wird.

## Patentansprüche

1. Verfahren zum Beschichten eines Werkstücks (W), umfassend die Schritte:
Zuführen eines Beschichtungsmaterials (B) und Andrücken des Beschichtungsmaterials (B) am Werkstück (W) mittels einer Andruckeinrichtung (11, 11', 11"; 12, 12', 12"),
wobei während des Andrückens des Beschichtungsmaterials eine Position und/oder eine Anpresskraft der Andruckeinrichtung (11, 11', 11"; 12, 12', 12") erfasst wird, um eine Relativposition der Andruckeinrichtung (11, 11', 11"; 12, 12', 12") zum Werkstück (W) zu ermitteln, **dadurch gekennzeichnet, dass** die Position und/oder Anpresskraft der Andruckeinrichtung (11, 11', 11"; 12, 12', 12") oder die Relativposition mit einem Soll-Wert abgeglichen wird, wobei bei Abweichung der Position und/oder Anpresskraft der Andruckeinrichtung (11, 11', 11"; 12, 12', 12") oder der Relativposition um einen ersten Schwellwert vom Soll-Wert ein optisches und/oder akustisches Warnsignal ausgegeben wird.

2. Verfahren gemäß Anspruch 1, **dadurch gekennzeichnet, dass** die Position und/oder Anpresskraft der Andruckeinrichtung (11, 11', 11"); 12, 12', 12") oder die Relativposition mit einer Soll-Wert-Kurve abgeglichen wird, wobei bei Abweichung der Position und/oder Anpresskraft der Andruckeinrichtung (11, 11', 11"; 12, 12', 12") oder der Relativposition um einen ersten Schwellwert von der Soll-Wert-Kurve ein optisches und/oder akustisches Warnsignal ausgegeben wird, wobei bevorzugt ist, dass bei Abweichen der Position und/oder Anpresskraft der Andruckeinrichtung (11, 11', 11"; 12, 12', 12") oder der Relativposition um einen zweiten Schwellwert ein Maschinenstopp bedingt wird.

3. Verfahren gemäß einem der vorangegangenen Ansprüche, **dadurch gekennzeichnet, dass** beim Zuführen des Beschichtungsmaterials (B) eine Temperatur des Beschichtungsmaterials (B) und/oder Temperatur eines am Beschichtungsmaterial (B) vorgesehenen Haftmittels erfasst wird.

4. Verfahren gemäß einem der vorangegangenen Ansprüche, **dadurch gekennzeichnet, dass** beim Zuführen des Beschichtungsmaterials (B) eine Länge des Beschichtungsmaterials (B) erfasst wird.

5. Verfahren gemäß einem der vorangegangenen Ansprüche, **dadurch gekennzeichnet, dass** die Position und/oder Anpresskraft der Andruckeinrichtung (11, 11', 11"; 12, 12', 12") und/oder eine Relativposition der Andruckeinrichtung (11, 11', 11"; 12, 12', 12") zum Werkstück (W) zu einer Speichereinrichtung, insbesondere einer Cloud, übertragen wird.

6. Verfahren gemäß einem der vorangegangenen Ansprüche, **dadurch gekennzeichnet, dass** das Beschichtungsmaterial (B) ein streifenförmiges Beschichtungsmaterial zur Beschichtung einer Schmalseite eines plattenförmigen Werkstücks (W) ist.

7. Beschichtungsvorrichtung (10) zum Anbringen eines Beschichtungsmaterials (B) an einem Werkstück (W), umfassend:
eine Andruckeinrichtung (11, 11', 11"; 12, 12', 12") zum Andrücken des Beschichtungsmaterials (B) an das Werkstück (W),
eine Einrichtung zum Ändern der Position der Andruckeinrichtung (11, 11', 11"; 12, 12', 12"),
eine Erfassungseinrichtung zur Erfassung einer Position und/oder Anpresskraft der Andruckeinrichtung (11, 11', 11"; 12, 12', 12"), um eine Relativposition der Andruckeinrichtung (11, 11', 11"; 12, 12', 12") zum Werkstück (W) zu ermitteln,
**dadurch gekennzeichnet, dass** die Beschichtungsvorrichtung
ferner eine Steuereinrichtung zur Aufnahme der ermittelten Position und/oder Anpresskraft der Andruckeinrichtung (11, 11', 11"; 12, 12', 12") oder der Relativposition umfasst,
wobei die Steuereinrichtung eingerichtet ist, eine Position und/oder Anpresskraft der Andruckeinrichtung (11, 11', 11"; 12, 12', 12") oder der Relativposition mit einem Soll-Wert abzugleichen, wobei bei Abweichung der Position und/oder Anpresskraft der Andruckeinrichtung (11, 11', 11"; 12, 12', 12") oder der Relativposition um einen ersten Schwellwert vom Soll-Wert ein optisches und/oder akustisches Warnsignal ausgebbar ist.

8. Beschichtungsvorrichtung gemäß Anspruch 7, ferner umfassend eine Temperaturmesseinrichtung (20'), die eingerichtet ist, eine Temperatur des Beschichtungsmaterials (B) und/oder Temperatur eines am Beschichtungsmaterial (B) vorgesehenen Haftmittels zu erfassen.

9. Beschichtungsvorrichtung gemäß einem der Ansprüche 7-8, ferner umfassend eine Einrichtung (30") zur Ermittlung der Länge des Beschichtungsmaterials, insbesondere ein Messrad.

10. Beschichtungsvorrichtung gemäß einem der Ansprüche 7-9, **dadurch gekennzeichnet, dass** die Andruckeinrichtung (11, 11', 11") exzentrisch gelagert ist.

11. Beschichtungsvorrichtung gemäß einem der Ansprüche 7-10, **dadurch gekennzeichnet, dass** die Einrichtung zum Ändern der Position der Andruckeinrichtung (11, 11', 11"; 12, 12', 12") eine Antriebseinrichtung, bevorzugt einen Servomotor, umfasst.

12. Beschichtungsvorrichtung gemäß einem der Ansprüche 7-11, **dadurch gekennzeichnet, dass** die Andruckeinrichtung eine Andruckrolle ist, mit der das Beschichtungsmaterial mit dem Werkstück in Kontakt gebracht wird, und/oder Nachdruckrolle (12, 12', 12") ist, mit der das am Werkstück angebrachte Beschichtungsmaterial angedrückt wird.

13. Beschichtungsvorrichtung gemäß einem der Ansprüche 7-12,
wobei die Steuereinrichtung eingerichtet ist, eine Position und/oder Anpresskraft der Andruckeinrichtung (11, 11', 11"; 12, 12', 12") oder der Relativposition einer Soll-Wert-Kurve abzugleichen, wobei bevorzugt ist, dass die Steuereinrichtung ferner eingerichtet ist, Steuerbefehle auszugeben, um die Position der Andruckeinrichtung zu ändern.

14. Beschichtungsvorrichtung gemäß einem der Ansprüche 7-13, **dadurch gekennzeichnet, dass** die Andruckeinrichtung (11, 11', 11"; 12, 12', 12"), bevorzugt entlang der Anpressrichtung, federnd gelagert ist und die Ausgleichbewegung gemessen wird.

15. Beschichtungsvorrichtung gemäß einem der Ansprüche 7-14, **dadurch gekennzeichnet, dass** die Beschichtungsvorrichtung einen Abstandssensor aufweist, der eingerichtet ist, die Relativposition der Andruckeinrichtung (11, 11', 11") zum Werkstück zu erfassen.

## Claims

1. A method for coating a workpiece (W), comprising the steps:
supplying a coating material (B) and pressing the coating material (B) onto the workpiece (W) by means of a pressure apparatus (11, 11', 11"; 12, 12', 12"), wherein, during the pressing of the coating material, a position and/or a contact force of the pressure apparatus (11, 11', 11"; 12, 12', 12") is detected in order to determine a relative position of the pressure apparatus (11, 11', 11"; 12, 12', 12") to the workpiece (W),
**characterized in that** the position and/or contact force of the pressure apparatus (11, 11', 11"; 12, 12', 12") or the relative position is compared with a target value, wherein, if the position and/or contact force of the pressure apparatus (11, 11', 11"; 12, 12', 12") or the relative position deviates from the target value by a first threshold value, an optical and/or acoustic warning signal is issued.

2. The method according to claim 1, **characterized in that** the position and/or contact force of the pressure apparatus (11, 11', 11"; 12, 12', 12") or the relative position is compared with a target value curve, wherein, if the position and/or contact force of the pressure apparatus (11, 11', 11"; 12, 12', 12") or the relative position deviates from the target value curve by a first threshold value, an optical and/or acoustic warning signal is issued, wherein it is preferred that, if the position and/or contact force of the pressure apparatus (11, 11', 11"; 12, 12', 12") or the relative position deviates by a second threshold value, a machine stop is triggered.

3. The method according to any one of the preceding claims, **characterized in that**, when the coating material (B) is supplied, a temperature of the coating material (B) and/or a temperature of an adhesion agent, provided on the coating material (B), is detected.

4. The method according to any one of the preceding claims, **characterized in that** a length of the coating material (B) is detected when the coating material (B) is supplied.

5. The method according to any one of the preceding claims, **characterized in that** the position and/or contact force of the pressure apparatus (11, 11', 11"; 12, 12', 12") and/or a relative position of the pressure apparatus (11, 11', 11"; 12, 12', 12") to the workpiece (W) is transferred to a storage apparatus, in particular a cloud.

6. The method according to any one of the preceding claims, **characterized in that** the coating material (B) is a strip-shaped coating material for coating a narrow side of a plate-shaped workpiece (W).

7. A coating device (10) for applying a coating material (B) to a workpiece (W), comprising:
a pressure apparatus (11, 11', 11"; 12, 12', 12") for pressing the coating material (B) onto the workpiece (W),
an apparatus for changing the position of the pressure apparatus (11, 11', 11"; 12, 12', 12"),
a detection apparatus for detecting a position and/or contact force of the pressure apparatus (11, 11', 11"; 12, 12', 12") in order to determine a relative position of the pressure apparatus (11, 11', 11"; 12, 12', 12") to the workpiece (W),
**characterized in that** the coating device
further comprises a control apparatus for recording the determined position and/or contact force of the pressure apparatus (11, 11', 11"; 12, 12', 12") or the relative position,
wherein the control apparatus is arranged to compare a position and/or contact force of the pressure apparatus (11, 11', 11"; 12, 12', 12") or the relative position with a target value, wherein, if the position and/or contact force of the pressure apparatus (11, 11', 11"; 12, 12', 12") or the relative position deviates from the target value by a first threshold value, an optical and/or acoustic warning signal can be issued.

8. The coating device according to claim 7, further comprising a temperature measuring apparatus (20') which is arranged to detect a temperature of the coating material (B) and/or a temperature of an adhesion agent, provided on the coating material (B).

9. The coating device according to any one of claims 7-8, further comprising an apparatus (30") for determining the length of the coating material, in particular a measuring wheel.

10. The coating device according to any one of claims 7-9, **characterized in that** the pressure apparatus (11, 11', 11") is mounted eccentrically.

11. The coating device according to any one of claims 7-10, **characterized in that** the device for changing the position of the pressure apparatus (11, 11', 11"; 12, 12', 12") comprises a drive apparatus, preferably a servomotor.

12. The coating device according to any one of claims 7-11, **characterized in that** the pressure apparatus is a pressure roller with which the coating material is brought into contact with the workpiece, and/or an impression roller (12, 12', 12"), which is used to press down the coating material, applied to the workpiece.

13. The coating device according to any one of claims 7-12,
wherein the control apparatus is arranged to adjust a position and/or contact force of the pressure apparatus (11, 11', 11"; 12, 12', 12") or the relative position of a target value curve, wherein it is preferred that the control apparatus is further configured to issue control commands to adjust the position of the pressure apparatus.

14. The coating device according to any one of claims 7-13, **characterized in that** the pressure apparatus (11, 11', 11"; 12, 12', 12"), preferably along the direction of contact, is spring-mounted and the compensating movement is measured.

15. The coating device according to any one of claims 7-14, **characterized in that** the coating device has a distance sensor which is arranged to detect the relative position of the pressure apparatus (11, 11', 11") to the workpiece.

## Revendications

1. Procédé pour revêtir une pièce (W), comprenant les étapes :
d'amenée d'un matériau de revêtement (B) et de compression du matériau de revêtement (B) contre la pièce (W) au moyen d'un appareil de compression (11, 11', 11" ; 12, 12', 12"), dans lequel pendant la compression du matériau de revêtement, une position et/ou une force de pression de l'appareil de compression (11, 11', 11" ; 12, 12', 12") est détectée pour déterminer une position relative de l'appareil de compression (11, 11', 11" ; 12, 12', 12") par rapport à la pièce (W),
**caractérisé en ce que** la position et/ou force de pression de l'appareil de compression (11, 11', 11" ; 12, 12', 12") ou la position relative est comparée à une valeur de consigne, dans lequel en cas d'écart de la position et/ou force de pression de l'appareil de compression (11, 11', 11" ; 12, 12', 12") ou de la position relative d'une première valeur seuil par rapport à la valeur de consigne, un signal d'avertissement optique et/ou acoustique est émis.

2. Procédé selon la revendication 1, **caractérisé en ce que** la position et/ou force de pression de l'appareil de compression (11, 11', 11" ; 12, 12', 12") ou la position relative est comparée à une courbe de valeur de consigne, dans lequel en cas d'écart de la position et/ou force de pression de l'appareil de compression (11, 11', 11" ; 12, 12', 12") ou de la position relative d'une première valeur seuil par rapport à la courbe de valeur de consigne, un signal d'avertissement optique et/ou acoustique est émis, dans lequel il est préférable qu'en cas d'écart de la position et/ou force de pression de l'appareil de compression (11, 11', 11" ; 12, 12', 12") ou de la position relative d'un deuxième seuil, un arrêt de la machine soit imposé.

3. Procédé selon l'une quelconque des revendications précédentes, **caractérisé en ce qu'**une température du matériau de revêtement (B) et/ou température d'un adhésif prévu sur le matériau de revêtement (B) est détectée lors de l'amenée du matériau de revêtement (B).

4. Procédé selon l'une quelconque des revendications précédentes, **caractérisé en ce qu'**une longueur du matériau de revêtement (B) est détectée lors de l'amenée du matériau de revêtement (B).

5. Procédé selon l'une quelconque des revendications précédentes, **caractérisé en ce que** la position et/ou force de pression de l'appareil de compression (11, 11', 11" ; 12, 12', 12") et/ou une position relative de l'appareil de compression (11, 11', 11" ; 12, 12', 12") par rapport à la pièce (W) est transmise à un appareil de stockage, en particulier un cloud.

6. Procédé selon l'une quelconque des revendications précédentes, **caractérisé en ce que** le matériau de revêtement (B) est un matériau de revêtement en forme de bande pour le revêtement d'un côté étroit d'une pièce (W) en forme de plaque.

7. Dispositif de revêtement (10) pour appliquer un matériau de revêtement (B) sur une pièce (W), comprenant :
un appareil de compression (11, 11', 11" ; 12, 12', 12") pour compresser le matériau de revêtement (B) contre la pièce (W),
un appareil pour modifier la position de l'appareil de compression (11, 11', 11" ; 12, 12', 12"),
un appareil de détection pour détecter une position et/ou force de pression de l'appareil de compression (11, 11', 11" ; 12, 12', 12"), pour déterminer une position relative de l'appareil de compression (11, 11', 11" ; 12, 12', 12") par rapport à la pièce (W),
**caractérisé en ce que** le dispositif de revêtement comprend en outre un appareil de commande pour recevoir la position et/ou force de pression déterminée de l'appareil de compression (11, 11', 11" ; 12, 12', 12") ou de la position relative, dans lequel l'appareil de commande est configuré pour comparer une position et/ou force de pression de l'appareil de compression (11, 11', 11" ; 12, 12', 12") ou de la position relative à une valeur de consigne, dans lequel un signal d'avertissement optique et/ou acoustique peut être émis en cas d'écart de la position et/ou force de pression de l'appareil de compression (11, 11', 11" ; 12, 12', 12") ou de la position relative d'une première valeur seuil par rapport à la valeur de consigne.

8. Dispositif de revêtement selon la revendication 7, comprenant en outre un appareil de mesure de température (20') qui est configuré pour détecter une température du matériau de revêtement (B) et/ou température d'un adhésif prévu sur le matériau de revêtement (B).

9. Dispositif de revêtement selon l'une quelconque des revendications 7 à 8, comprenant en outre un appareil (30") pour déterminer la longueur du matériau de revêtement, en particulier une roue de mesure.

10. Dispositif de revêtement selon l'une quelconque des revendications 7 à 9, **caractérisé en ce que** l'appareil de compression (11, 11', 11") est monté de manière excentrique.

11. Dispositif de revêtement selon l'une quelconque des revendications 7 à 10, **caractérisé en ce que** l'appareil pour modifier la position de l'appareil de compression (11, 11', 11" ; 12, 12', 12") comprend un appareil d'entraînement, de préférence un servomoteur.

12. Dispositif de revêtement selon l'une quelconque des revendications 7 à 11, **caractérisé en ce que** l'appareil de compression est un rouleau de compression avec lequel le matériau de revêtement est mis en contact avec la pièce, et/ou rouleau de post-compression (12, 12', 12") avec lequel le matériau de revêtement appliqué sur la pièce est compressé.

13. Dispositif de revêtement selon l'une quelconque des revendications 7 à 12,
dans lequel l'appareil de commande est configuré pour comparer une position et/ou force de pression de l'appareil de compression (11, 11', 11" ; 12, 12', 12") ou la position relative à une courbe de valeur de consigne, dans lequel il est préférable que l'appareil de commande soit en outre configuré pour émettre des instructions de commande pour modifier la position de l'appareil de compression.

14. Dispositif de revêtement selon l'une quelconque des revendications 7 à 13, **caractérisé en ce que** l'appareil de compression (11, 11', 11" ; 12, 12', 12"), de préférence le long de la direction de pression, est monté sur ressort et le mouvement de compensation est mesuré.

15. Dispositif de revêtement selon l'une quelconque des revendications 7 à 14, **caractérisé en ce que** le dispositif de revêtement présente un capteur de distance qui est configuré pour détecter la position relative de l'appareil de compression (11, 11', 11") par rapport à la pièce.
